Europäisches Patentamt

European Patent Office

Office européen des brevets

(19)

(11) Numéro de publication : **0 410 842 B1**

(12)                    **FASCICULE DE BREVET EUROPEEN**

(45) Date de publication du fascicule du brevet :
16.12.92 Bulletin 92/51

(51) Int. Cl.⁵ : **F16L 37/08**

(21) Numéro de dépôt : **90402024.5**

(22) Date de dépôt : **13.07.90**

(54) **Raccord rapide.**

(30) Priorité : **28.07.89 FR 8910253**

(43) Date de publication de la demande :
**30.01.91 Bulletin 91/05**

(45) Mention de la délivrance du brevet :
**16.12.92 Bulletin 92/51**

(84) Etats contractants désignés :
**AT BE CH DE DK ES FR GB GR IT LI LU NL SE**

(56) Documents cités :
**US-A- 3 066 959**
**US-A- 3 503 637**

(73) Titulaire : **Etablissements CAILLAU**
**28, rue Ernest Renan**
**F-92130 Issy-les-Moulineaux (FR)**

(72) Inventeur : **Calmettes, Lionel**
**84, Faubourg d'Orléans**
**F-41200 Romorantin Lanthenay (FR)**

(74) Mandataire : **Descourtieux, Philippe et al**
**CABINET BEAU de LOMENIE 55 rue**
**d'Amsterdam**
**F-75008 Paris (FR)**

## Description

La présente invention se rapporte, d'une façon générale, aux dispositifs destinés à accoupler deux tuyaux, particulièrement aux dispositifs de ce genre dénommés dans ce qui suit "raccords rapides", selon le préambule de la revendication 1.

On connaît déjà divers types de raccords rapides tels que ceux décrits, notamment par les demandes DE-A-2.016.850 et FR-A-2.171.456, ainsi que par le brevet américain US-A-2.750.209. Ils comportent essentiellement une douille susceptible d'être fixée à l'extrémité d'un premier tuyau et apte à recevoir l'extrémité rigide d'un deuxième tuyau ou un embout rigide raccordé à ce dernier.

D'une façon générale, la douille comporte, d'une part des moyens d'étanchéité coopérant avec l'embout rigide, d'autre part des moyens d'immobilisation axiale coopérant avec des organes complémentaires liés à l'embout.

On connaît également par le brevet US-A-3.503.637 un raccord rapide dans lequel les moyens d'étanchéité comportent une bague annulaire souple, coulissant dans une partie cylindrique de la douille destinée à recevoir l'extrémité libre de l'embout. Un ressort de compression, enrobé dans un matériau souple, tel que le caoutchouc, est disposé dans la partie cylindrique de la douille entre la bague annulaire et une butée axiale liée à la douille; ce ressort est maintenu comprimé par l'extrémité de l'embout après assemblage du raccord.

Toutefois, on a constaté que, sur les raccords connus les moyens d'étanchéité exigent des précautions de fabrication des divers éléments appelés à coopérer, souvent incompatibles avec une fabrication en grande série, en raison notamment des prix de revient élevés qu'elles entraînent.

La présente invention apporte des perfectionnements aux moyens d'étanchéité nécessaires pour l'utilisation des raccords rapides du type en question et permet d'éliminer les inconvénients des moyens d'étanchéité connus.

Selon l'invention, les moyens d'étanchéité comportent un simple joint torique souple, cependant qu'une butée circulaire mobile, est montée coulissante dans une partie cylindrique de la douille, entre le joint torique et le ressort de compression. D'autre part la face d'appui sur le joint torique, de l'un au moins des deux éléments, butée mobile et extrémité de l'embout, est chanfreinée.

Grâce à ces dispositions, l'étanchéité du raccordement des deux tuyaux est obtenue simplement par l'appui du joint torique, d'une part, sur la partie cylindrique de la douille, d'autre part, sur l'extrémité libre de l'embout rigide et sur la face en regard de la butée mobile, contre l'action du ressort de compression.

Les avantages de cette solution pour la réalisation des moyens d'étanchéité du raccordement permettent également d'améliorer les moyens d'immobilisation axiale de l'embout rigide dans la douille. Plus précisément, il est possible d'utiliser la présence de l'effort axial dû au ressort de compression pour assurer le verrouillage de ces moyens d'immobilisation et leur déverrouillage facile, sans l'utilisation d'aucun outil. En outre, ainsi qu'on le verra plus loin, on peut compléter le raccord rapide par des organes permettant une indexation des deux éléments, douille et embout, ce qui autorisera une automatisation du montage du raccord.

L'invention sera mieux comprise et diverses caractéristiques secondaires concernant notamment les moyens de verrouillage et les moyens d'indexation, apparaîtront au cours de la description, qui va suivre, d'un mode de réalisation avantageux, donné uniquement à titre d'exemple. A cet effet, on se référera au dessin annexé, dans lequel

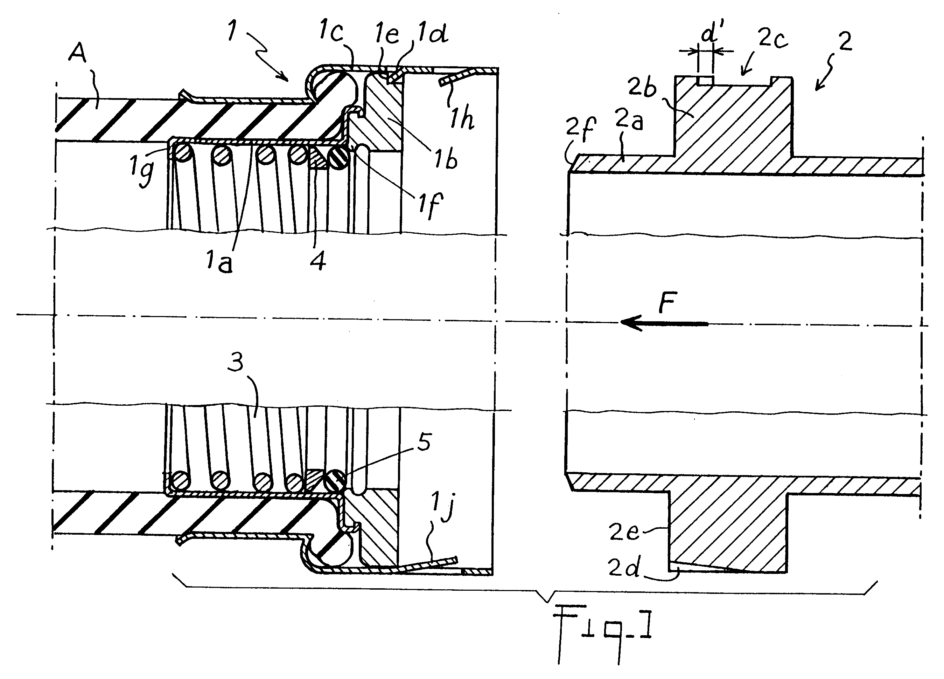

. la figure 1 représente, dans ses parties supérieure et inférieure, deux demi-vues en coupe axiale d'un raccord rapide selon l'invention, avant le raccordement des deux tuyaux

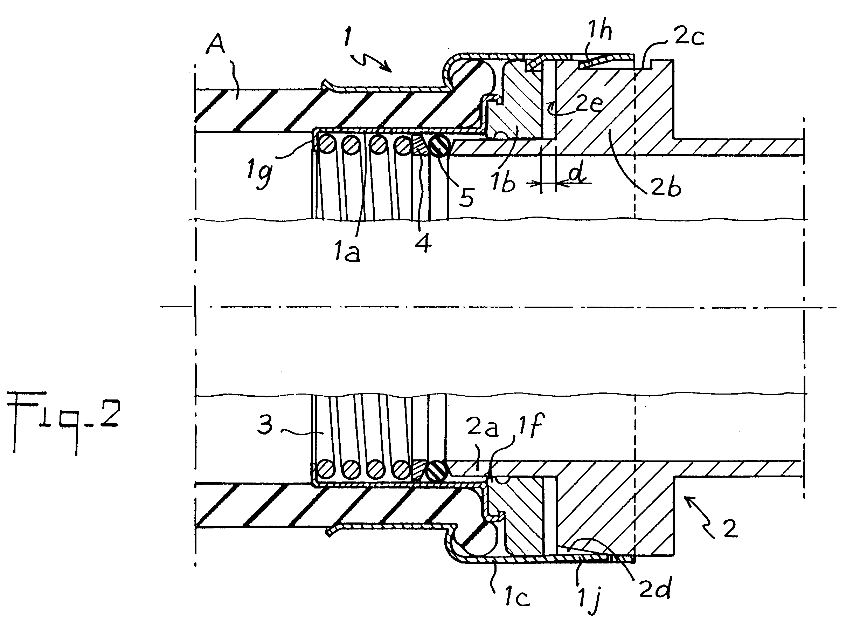

. la figure 2 est une vue analogue à la figure 1, après le raccordement

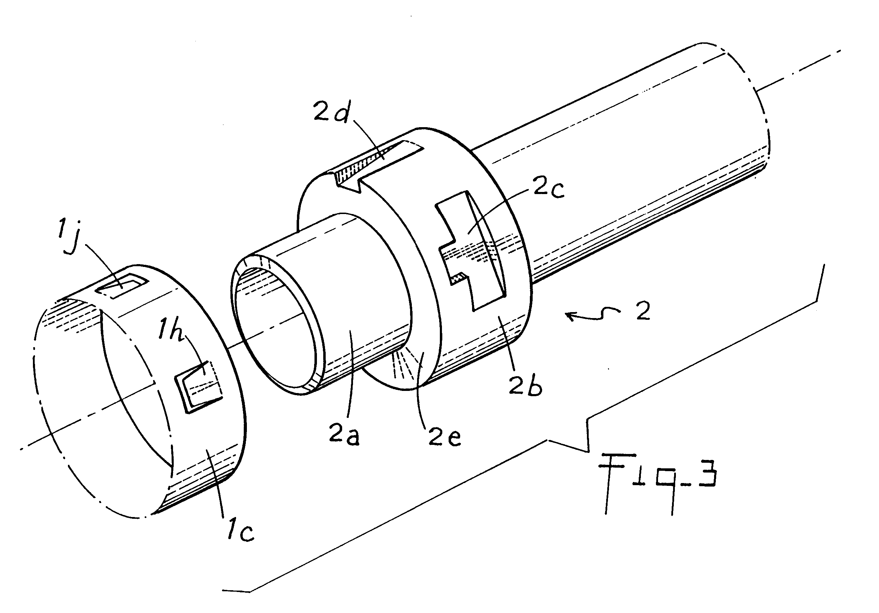

. la figure 3 est une vue en perspective d'une partie des extrémités en regard de la douille et de l'embout avant le raccordement.

Si l'on se reporte au dessin, on voit, sur la partie gauche de la figure 1, un tuyau A dont l'extrémité est montée sur une douille désignée par la référence générale 1. Le montage est réalisé selon les dispositions du brevet français 1434683. La douille 1 comprend un premier élément 1a, de préférence métallique et présentant une partie intérieure cylindrique, dont l'extrémité droite est sertie dans un anneau 1b. Une bague 1c, de préférence également en métal, agrippe la tuyau A et est immobilisée axialement par au moins un crochet 1d coopérant avec une butée 1e ménagée en correspondance dans l'anneau 1b.

La douille 1 est destinée à recevoir l'extrémité 2a d'un embout tubulaire rigide 2 présentant une collerette radiale 2b. L'embout 2 est raccordé par tout moyen approprié à un deuxième tuyau non représenté, à moins qu'il ne constitue lui-même l'extrémité d'un tube rigide.

On notera dès maintenant que le diamètre extérieur de l'extrémité 2a de l'embout est voisin du diamètre intérieur de la partie cylindrique 1a de la douille 1, ce diamètre intérieur étant lui aussi voisin de celui de l'anneau 1b de la douille. Toutefois, il peut être avantageux, pour des raisons qui apparaîtront plus loin, que la surface intérieure de l'anneau 1b comporte un jonc circulaire 1f faisant légèrement saillie vers l'intérieur de l'anneau.

L'élément 1a de la douille comporte, à son extrémité intérieure, un collet 1g constituant une butée axiale pour un ressort de compression 3. Sur la figure 1, ce ressort est détendu et son extrémité droite repose sur une butée mobile circulaire 4, montée coulissante dans l'élément 1a. A droite de la butée 4 se trouve un joint torique 5, en caoutchouc ou autre matériau approprié, également coulissant dans l'élément cylindrique 1a et maintenu à l'intérieur de ce dernier par le jonc 1f formant butée.

La bague 1c de la douille 1 se prolonge au-delà de la face terminale de l'anneau 1b et comporte au moins une patte 1h, bien visible sur la figure 3, s'étendant axialement depuis l'extrémité de la douille vers le tuyau A. A l'état libre, cette patte est dirigée vers l'intérieur du prolongement de la bague 1c de la douille 1.

Sur la surface extérieure de la collerette 2b de l'embout et en correspondance avec la ou les pattes 1h de la douille, est prévu au moins un logement 2c en forme de L, mieux visible sur la figure 3. L'une des branches du L s'étend axialement et la profondeur du logement y est de préférence constante, ainsi qu'on le voit sur la figure 1. En revanche, la branche transversale du logement (dans l'exemple représenté, il existe deux branches transversales donnant au logement 2c la forme d'un T) a un fond, éventuellement incliné, qui, à l'extrémité de la branche, rejoint la surface extérieure de la collerette.

D'autre part, le prolongement de la bague 1c de la douille 1 comporte avantageusement une deuxième patte 1j, s'étendant elle aussi axialement, mais dans le sens opposé au tube A, tout en faisant saillie vers l'intérieur de la douille.

Cette patte 1j est bien visible sur la figure 3 mais, pour une meilleure compréhension, on l'a représentée au voisinage de la patte 1h, contrairement à ce que suggère la figure 1.

La position angulaire relative des pattes 1h et 1j est d'ailleurs sans importance, sous réserve de ce qui sera précisé plus loin.

Sur la surface extérieure de la collerette 2b et en correspondance avec la patte 1j, est prévu un logement 2d, s'étendant axialement et débouchant sur la face transversale 2e de la collerette, située du côté de l'extrémité 2a de l'embout. Le fond du logement 2d est, de préférence, régulièrement incliné et son extrémité opposée à la face 2e rejoint la surface extérieure de la collerette. Toutefois, cette extrémité du logement 2d pourrait être constituée par une branche transversale, analogue à celle du logement 2c, dont le fond rejoindrait, lui aussi, la surface extérieure de la collerette.

La mise en oeuvre du raccord selon l'invention s'effectue de la façon suivante.

La douille 1 et son tuyau A étant supposés immobilisés, on déplace l'embout 2 dans le sens de la flèche F. L'extrémité 2a de l'embout est d'abord guidée par l'anneau 1b de la douille, puis correctement centrée par son jonc 1f. Le bord terminal chanfreiné 2f de l'embout prend appui sur le joint torique 5 qu'il repousse contre l'action du ressort de compression 3. La butée circulaire 4 est, elle aussi, chanfreinée, de sorte que, dès le début de la compression du ressort 3, le joint 5 se trouve emprisonné dans un logement de section trapézoïdale. De ce fait, il est convenablement appliqué, à la fois sur la surface intérieure de la partie cylindrique 1a de la douille et sur le bord terminal 2f de l'embout, assurant ainsi une bonne étanchéité entre ces deux éléments.

La poursuite du déplacement de l'embout 2 suivant la flèche F, provoque tout d'abord l'entrée de l'extrémité libre de la patte 1j dans le logement 2d, à condition, bien entendu, que les deux éléments, douille et embout, soient correctement orientés l'un par rapport à l'autre. En d'autres termes, la patte 1j et le logement 2d constituent des moyens complémentaires d'indexation, fort utiles pour l'automatisation du montage du raccord.

De son côté, la patte 1h s'est déformée légèrement pour glisser sur la surface extérieure de la collerette 2b.

En supposant bien évidemment que la distance angulaire des pattes 1h et 1j corresponde à celle des logements 2c et 2d, la poursuite du mouvement selon la flèche F, guidé par la coopération de la patte 1j et du logement 2d, provoquera la descente de la patte 1h dans le logement 2c. Le raccord rapide est alors verrouillé, l'extrémité libre de la patte 1h étant emprisonnée, tant latéralement qu'axialement, par l'extrémité de la branche axiale du logement 2c, cependant que le ressort 3 maintient la permanence de ce verrouillage.

Il faut ici noter que la longueur de l'extrémité 2a de l'embout doit être suffisante pour permettre la compression du ressort 3 mais, bien évidemment, inférieure à la longueur de la partie cylindrique de la douille entre le collet 1g et le jonc 1f; d'autre part, dans la position verrouillée visible sur la figure 2, il existe une certaine distance d entre la face 2e de la collerette et la face en regard de l'anneau 1b de la douille. Les dimensions des divers éléments du raccord seront déterminées de telle façon que cette distance d soit au moins égale à la distance d' entre l'extrémité axiale du logement 2c, du côté de la face 2e, et le début de sa branche transversale (figure 1).

Grâce à ces dispositions, le déverrouillage du raccord s'obtient facilement sans l'utilisation d'aucun outil. Il suffit, en effet, de rapprocher l'un de l'autre la douille et l'embout jusqu'à ce que la collerette 2b vienne en appui sur l'anneau 1b. Une rotation relative de la douille par rapport à l'embout fait alors sortir la patte 1h de son logement 2c par la branche transversale de ce dernier. La patte 1j ne s'oppose pas à cette rotation puisqu'elle est elle-même pratiquement sortie du logement 2d à la fin de l'opération de verrouillage du raccord. La douille et l'embout peuvent ensuite être dégagés axialement l'un de l'autre.

## Revendications

1. Raccord rapide pour l'accouplement de deux tuyaux, conduits ou analogues, comprenant une douille **(1)** susceptible d'être fixée à l'extrémité d'un premier tuyau **(A)** et apte à recevoir un embout tubulaire rigide **(2)** raccordé à un deuxième tuyau, la douille comportant, d'une part des moyens d'immobilisation axiale coopérant avec des organes complémentaires liés à l'embout, d'autre part des moyens d'étanchéité, constitués par un joint **(5)** monté coulissant dans une partie cylindrique **(1a)** de la douille, ledit joint étant susceptible d'être soumis, dans la direction opposée au premier tuyau, à l'action d'un ressort de compression **(3)** prenant appui sur une butée **(1g)** intérieure à la douille, de sorte que la coopération des moyens d'immobilisation axiale de la douille et des organes complémentaires liés à l'embout maintienne ledit ressort à l'état comprimé, caractérisé en ce que le joint est un simple joint torique, en ce qu'une butée circulaire mobile **(4)** est montée coulissante dans la partie cylindrique **(1a)** de la douille, entre le joint torique **(5)** et le ressort de compression **(3)**, et en ce que la face d'appui sur le joint torique, de l'un au moins des deux éléments, butée mobile **(4)** et extrémité **(2f)** de l'embout, est chanfreinée.

2. Raccord rapide selon la revendication 1, caractérisé en ce que l'embout tubulaire rigide **(2)** comporte, à une distance de son extrémité libre, inférieure à la longueur de la partie cylindrique de la douille **(1)**, une collerette radiale **(2b)** présentant, sur sa face extérieure, au moins un logement **(2c)** en forme de L, dont l'une des branches, dirigée axialement, est fermée et dont l'autre branche, s'étendant transversalement, rejoint à son extrémité la surface extérieure de la collerette, cependant que la douille présente, au-delà de sa partie cylindrique, au moins une patte élastique **(1h)**, s'étendant axialement vers le premier tuyau et faisant saillie vers l'intérieur de la douille.

3. Raccord rapide selon la revendication 2, caractérisé en ce que la collerette **(2b)** de l'embout présente, sur sa face extérieure, un deuxième logement **(2d)** s'étendant axialement qui, d'une part débouche sur la face transversale **(2e)** de la collerette, située du côté de l'extrémité libre **(2a)** de l'embout et, d'autre part, rejoint, à son extrémité opposée, la surface extérieure de la collerette, cependant que la douille comporte, au-delà de sa partie cylindrique, une patte élastique **(1j)** s'étendant axialement dans le sens opposé au premier tuyau et faisant saillie vers l'intérieur de la douille.

## Patentansprüche

1. Schnellkupplung zur Verbindung zweier Rohre, Leitungen od. dgl., umfassend eine Hülse (1), die am Ende eines ersten Rohres (A) befestigbar ist und ein mit einem zweiten Rohr verbundenes starres Rohrstück (2) aufnehmen kann, wobei die Hülse einerseits axiale Festellstelleinrichtungen, die mit am Rohrstück angebrachten komplementären Organen zusammenwirken, und anderseits Dichteinrichtungen aufweist, die durch eine Dichtung (5) gebildet sind, welche gleitend in einem zylindrischen Teil (1a) der Hülse gelagert ist und in zum ersten Rohr entgegengesetzter Richtung der Wirkung einer Druckfeder (3) unterworfen werden kann, welche auf einem Anschlag (1g) innerhalb der Hülse in Anlage kommt, sodaß die Feder durch das Zusammenwirken der axialen Feststelleinrichtungen der Hülse mit den am Rohrstück angebrachten komplementären Organen im zusammengedrückten Zustand gehalten wird, dadurch gekennzeichnet, daß die Dichtung eine einfache O-Ringdichtung ist, und daß ein beweglicher kreisförmiger Anschlag (4) im zylindrischen Teil (1a) der Hülse zwischen der O-Ringdichtung (5) und der Druckfeder (3) gleitend gelagert ist, und daß die Auflagefläche mindestens eines der beiden Elemente - beweglicher Anschlag (4) und Rohrstückende (2f) - abgeschrägt ist.

2. Schnellkupplung nach Anspruch 1, dadurch gekennzeichnet, daß das starre Rohrstück (2) in einem Abstand von seinem freien Ende innerhalb der Länge des zylindrischen Teils der Hülse (1) einen radialen Bund (2b) umfaßt, der an seiner Außenseite mindestens eine Aufnahme (2c) in Form eines L aufweist, dessen einer Schenkel, der axial gerichtet ist, geschlossen ist und dessen anderer Schenkel, der quer verläuft, an seinem Ende mit der Außenflache des Bundes zusammenlauft, wobei die Hülse außerhalb ihres zylindrischen Teils mindestens eine elastische Pratze (1h) aufweist, die sich axial zum ersten Rohr erstreckt und von der Hülse nach innen absteht.

3. Schnellkupplung nach Anspruch 2, dadurch gekennzeichnet, daß der Bund (2b) des Rohrstücks an seiner Außenseite eine zweite, axial verlaufende Aufnahme (2d) aufweist, die einerseits in der Querfläche (2e) des Bundes mündet, welche sich auf der Seite des freien Endes (2a) des Rohrstücks befindet, und anderseits an ihrem entgegengesetzten Ende mit der Außenfläche des Bundes zusammenläuft, wobei die Hülse außerhalb ihres zylindrischen Teils eine elastische Pratze (1j) aufweist, die sich axial in zum ersten Rohr entgegengesetzter Richtung erstreckt und von der Hülse nach innen absteht.

**Claims**

1. Quick-acting coupling for coupling together two pipes, ducts, or the like, comprising a tubular member (1) suitable for being fixed to the end of a first pipe (A) and suitable for receiving a rigid tubular endpiece (2) connected to a second pipe, the tubular member comprising both axial retention means co-operating with complementary members linked to the endpiece and sealing means constituted by a ring (5) slidably mounted in a cylindrical portion (1a) of the tubular member, said ring being suitable for being subjected to the action of a compression spring (3) bearing against an abutment (1g) inside the tubular member and urging the ring away from the first pipe such that co-operation between the axial retention means of the tubular member and the complementary members linked to the endpiece hold said spring in the compressed state, characterized in that the ring is a simple O-ring, and in that a moving circular abutment (4) is slidably mounted in the cylindrical portion (1a) of the tubular member between the O-ring (5) and the compression spring (3), and in that the O-ring engaging face of at least one of the two elements, moving abutment (4) and end (2f) of the endpiece, is chamfered.

2. Quick-acting coupling according to claim 1, characterized in that the rigid tubular endpiece (2) includes a radial flange (2b) at a distance from its free end which is less than the length of the cylindrical portion of the tubular member (1), the outside face of said radial flange including at least one L-shaped recess (2c) having an axially directed limb which is closed and a transversely extending limb whose end meets the outside surface of the flange, while the tubular member presents at least one resilient tab (1h), disposed beyond the cylindrical portion thereof and extending axially towards the first pipe and projecting towards the inside of the tubular member.

3. Quick-acting coupling according to claim 2, characterized in that the outside face of the flange (2b) of the endpiece includes a second recess (2d) extending axially opening out at one end into the transverse face (2e) of the flange adjacent to the free end (2a) of the endpiece and running into the outside surface of the flange at its opposite end, with the tubular member including a resilient tab (1j) beyond its cylindrical portion which extends axially away from the first pipe and projects towards the inside of the tubular member.

Fig.1

Fig-2

Fig. 3